# EUROPEAN PATENT APPLICATION

(11) **EP 2 273 033 A2**
(43) Date of publication of application: **12.01.2011**
(21) Application number: 10251061.7
(22) Date of filing: 08.06.2010
(51) Int. Cl.: E04D 13/14

(54) **Wedge device for securing flashing**

(30) Priority: 08.06.2009 GB 0909824
(71) Applicant: Morton Roofing Products Limited, Fox Yard Farnham Surrey GU9 7EY (GB)
(72) Inventor: Morton, Terence, Bracknell, Berkshire (GB)
(74) Representative: Brereton, Paul Arthur

(57) **Abstract**

A wedge device (20) for retaining the edge of flashing in a chase in a wall or similar structure. The wedge device (20) comprises a hollow wedge structure formed in one piece from a hard thermoplastic material. The structure is open on its front side (30) and has opposing top and bottom planar walls (25 and 26) which are generally planar and have outer surfaces (27 and 28) that are inclined relative to one another so as to converge towards the rear (35) of the device. The planar wall portions (25,26) are joined together at both of their corresponding incline sides (91 and 92) and at (93 and 94) by curved side wall portions (32 and 33). The curved wall portions (32,33) hold the planar wall portions (25,26) apart from one another but flex under pressure to allow the planar wall portions (25,26) to move towards one another when, in use, the wedge device (20) is squeezed into a chase. Ribs (39 to 44) project from the outer surfaces (27 and 28) to grip the flashing and the overlying brickwork when inserted into a chase.

## Description

The present invention relates to a wedge device for securing flashing in chases in brickwork and the like.

Flashing is used to prevent water penetration at the junction between a roof structure and an adjacent wall, chimney or other building structure. Flashing comprises a strip of lead, zinc or other material that is impervious to water. The flashing strip is normally bent along its longitudinal axis with one portion overlapping or overlapped by the edge of the roofing material of the roof structure and the other portion extending up the adjacent wall, chimney or other building structure. The upper edge of the flashing is usually bent horizontally to form a flange which is inserted into a chase cut between adjacent courses of brickwork. Where the junction between the brickwork and the roofing structure is on an incline, the upper edge of the flashing is cut in the form of a series of steps with the upper edges of each step folded over and placed in chases at different levels in the brickwork.

It is necessary to fix the flanges at the edges of the flashing strip in the chases at least temporarily whilst the fitting of the flashing is completed and the chases in the mortar layers are filled with a sealant or mortar.

The traditional way of holding the flanges in place is to roll up pieces of waste lead and ram them into the chase between the flange and the overlying course of bricks. More recently wedges have been used that are specifically manufactured for the purpose by bending strips of metal, typically stainless steel, into a V-shaped wedge.

The metal wedges have several disadvantages. They may be permanently deformed by the action of ramming into the chase, and therefore not provide the desired grip. They may rotate as they are forced into the chase and thus not grip the flashing effectively. Their hard sharp edges may score the softer flashing material, typically lead. The sharp edges may also damage clothing or injure the operator fitting the flashing.

It has also been proposed to make such V-shaped wedges of plastics material but such wedges may suffer some of these disadvantages and may not be sufficiently strong and therefore be liable to split at the base of the V where the limbs of the V are joined together..

According to the present invention in a first aspect there is provided a wedge device for retaining the edge of flashing in a chase in a wall or similar structure, the wedge device comprising a hollow wedge structure which is open at a front of the structure and has opposing top and bottom planar wall portions with outer surfaces that are inclined relative to one another so as to converge towards one another towards the rear of the structure, the planar wall portions being joined together at both of their corresponding inclined sides by curved wall portions, the planar wall portions and the curved wall portions being integrally moulded from plastics material, the curved wall portions holding the planar wall portions apart from one another, but flexing under pressure so as to allow the planar wall portions to move towards one another when, in use, the wedge device is squeezed into a chase.

The curved wall portions act as springs which allow the structure to be squeezed under the forces caused by insertion into a chase of appropriate dimensions so that in use the device can firmly hold the flange on the flashing in place in the chase. By joining the planar wall portions together along both pairs of inclined sides a stronger structure can be achieved compared with the known structure.

In a preferred embodiment of the invention the planar wall portions are also joined together at the rear of the structure by a rear wall portion. Joining the planar walls together on three sides enables a stronger structure to be achieved.

Preferably the rear of the structure has one or more openings to allow, in use, sealant injected through the front of the structure to flow out through the rear of the structure. Where the device has a rear wall portion, the openings may be provided between the real wall portion and each side wall portion.

In a preferred embodiment an abutment portion projects rearwardly from the structure for abutting the back of the chase in use to space other parts of the structure from the back of the chase. The abutment may be provided by the rear wall portion.

Preferably gripping means project from the outer surfaces of the planar wall portions. The gripping means may comprise ribs projecting outwardly from the outer surface of the planar wall portions, In use, the gripping means improve the grip between the device, the brickwork and the flashing.

The gripping means may comprise ribs projecting outwardly from the outer surface of the planar wall portions, In an embodiment the ribs extending generally parallel to the front of the structure, The ribs may be thicker at their base where they join the planar wall portions than at their tips.

Preferably, the tips of the ribs that are nearer to the front of the structure project further from the centreline of the structure than the tips of the ribs that are nearer to the rear.

Preferably the structure is shaped so that the rear of the structure can be nested in the open front end of an identical wedge device. It may include releasable interlocking means for releasably holding the nested wedge devices together in a stack.

The releasable interconnecting means may comprise an inwardly projecting lip on the inside of the front of the structure and a recess on the outside of at least one of the planar walls, the lip on one device engaging in the recess of the other device when the wedge device is nested with an identical device. The recess may be provided by a groove that extends parallel to the front of the device. The lip may extend all round the inside of the front end of the structure.

According to the present invention in another aspect, a wedge device for retaining the edge of flashing in a chase in a wall or similar structure, the wedge device comprises a hollow structure moulded from plastics material which is open at the front of the structure and has opposing top and bottom wall portions, the top and bottom wall portions being joined together at both of their corresponding sides by curved wall portions, the planar wall portions and the curved wall portions, gripping means projecting from the outer surfaces of the top and bottom wall portions, the outer extremities of the gripping means near to the front of the structure projecting further from the centreline of the structure that than the extremities of the gripping means near to the rear. The gripping means are deformed progressively as the wedge device is pushed rear-first into the chase in brickwork, the gripping means at the front of the device being deformed or displaced more than those at the rear, in order to fit into the space between the flashing and the overlying course of brickwork.

Preferably the gripping means are in the form of ribs. The top and bottom wall portions may be planar. The bottom ant top wall portions may converge towards one another towards the rear of the structure. The ribs may be parallel to the front of the structure. They may be of uniform height with respect to the outer surfaces of the top and bottom wall portions.

The wedge device described above may be used in combination with a tool for inserting the device into a chase, the tool having a handle and means for releasably engaging with the open front end of the device.

The engaging means may comprise a forwardly projecting flange, the width of the flange corresponding to the internal width of the front end of the device so that the ends of the flange engage on the inside of the curved wall portions of the device at the front of the device when the flange is inserted in the device. A notch may be provided in at least one of the transverse ends of the flange for engagement with a lip on the inside of the front end of the device to releasably grip the device on the front end of the tool.

The invention also provides a method of securing flashing in a chase in a wall or similar structure, comprising inserting a flange on the flashing into the chase and inserting a wedge device as described above in a the chase, so that the device is squeezed between a flange on the flashing and the overlying side of the chase and the device grips the flashing and the overlying wall of the chase.

Other features of the preferred embodiment of the invention are set out in the description which follows and in the dependent claims.

The invention also relates to a method of securing flashing using the wedge device as described above and to a tool for inserting the wedge device into a chase in a wall structure.

An embodiment of the invention will now be described, by way of example, with reference to the accompanying drawing, in which:
Figure 1 shows a perspective view of a typical arrangement of flashing on a roof structure;
Figure 2 shows an enlarged view of the flashing of figure 1 secured with wedge devices in accordance with to the present invention;
Figure 3 shows a cross-section through the wall structure of figure 2 with the wedge device in place before re-pointing;
Figure 4 shows the view of figure 3 after the chase has been pointed;
Figure 5 shows a front perspective view of a wedge device in accordance with the invention;
Figure 6 shows a rear perspective of the wedge device of figure 5;
Figure 7 shows a front elevation of the wedge device of figure 5;
Figure 8 shows a rear elevation of the wedge device of figure 5;
Figure 9 shows the side elevation of the wedge device of figure 5;
Figure 10 shows a plan view of the wedge device of figure 5.
Figure 11 shows a section on the line 11-11 of figure 10;
Figure 12 shows a perspective view of a stack of wedge devices in accordance with the invention;
Figure 13 shows a cross section of a detail of the stack of figure 12;
Figure 14 shows the perspective view of a tool for use in inserting the wedging devices of figure 5;
Figure 15 shows a plan view of a detail showing a device partly in section mounted on the tool of figure 14; and
Figure 16 shows a front elevation of a wedge device in accordance with the invention inserted in a chase in brickwork.

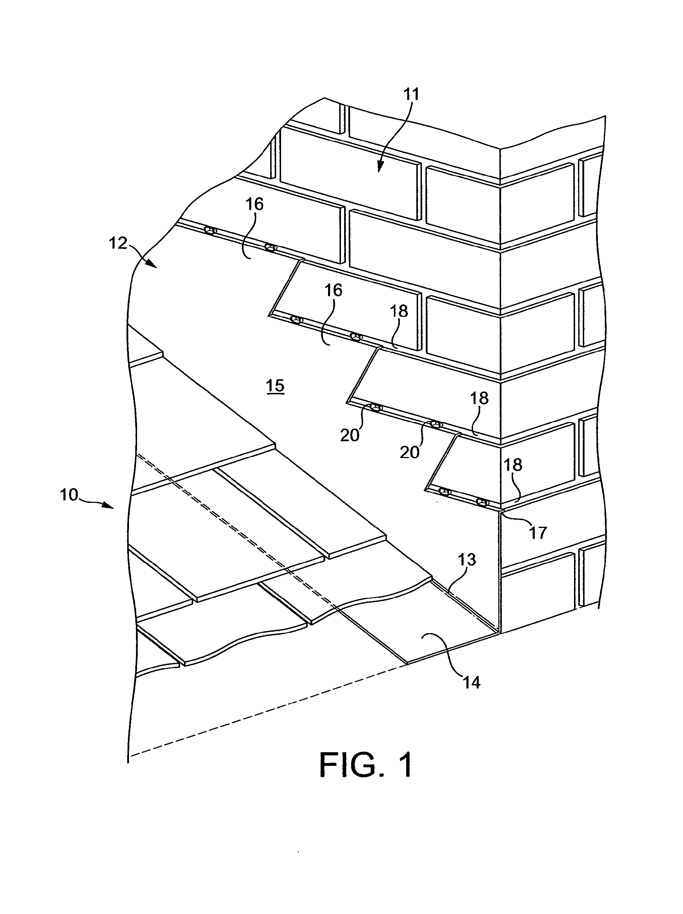

Referring to figure 1, this shows a conventional flashing arrangement for covering the joint between a sloping pitch roof 10 and a vertical brick wall 11. A strip 12 of flashing material is bent along its longitudinal axis 13 to form an L- shaped section. Typically the flashing is made from a strip of lead. A first portion 14 of the flashing material extends under the tiles that form an edge portion of the roof structure 10. An upstanding portion 15 of the flashing material lies against the vertical surface of the adjacent wall 11. The upstanding portion 15 is cut to form a series of steps 16 by removing triangles of the flashing material. Each step 16 has an upper edge that is aligned with the mortar layers between successive courses of the brickwork. The upper edge of each step 16 is bent over at right angles to the rest of the upstanding portion 15 to form a flange 17 which is aligned with the mortar layer between courses of bricks. The mortar in the region of each flange is removed by chasing to form a chase or channel 18 into which the flange 17 is inserted.

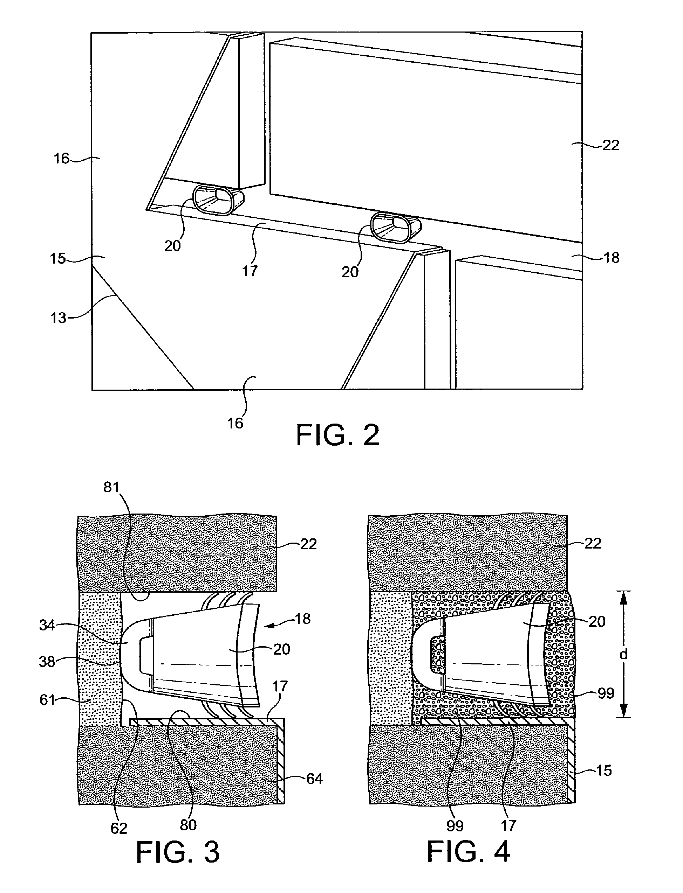

In order to retain the flanges 17 in the chases 18 and hence hold the flashing material in place against the wall whilst the flashing is being fitted and also subsequently, wedge devices 20 in accordance with the invention are inserted into the chases 18. In the arrangement shown in figure 2, two devices 20 are used to hold each flange 17 in place. As can be seen in figures 3 and 4, the devices 20 grip the upper surface 80 of the flanges 17 on the flashing and the underside 81 of the overlying brick layer 22 to hold the flange 17 in the chase 18.

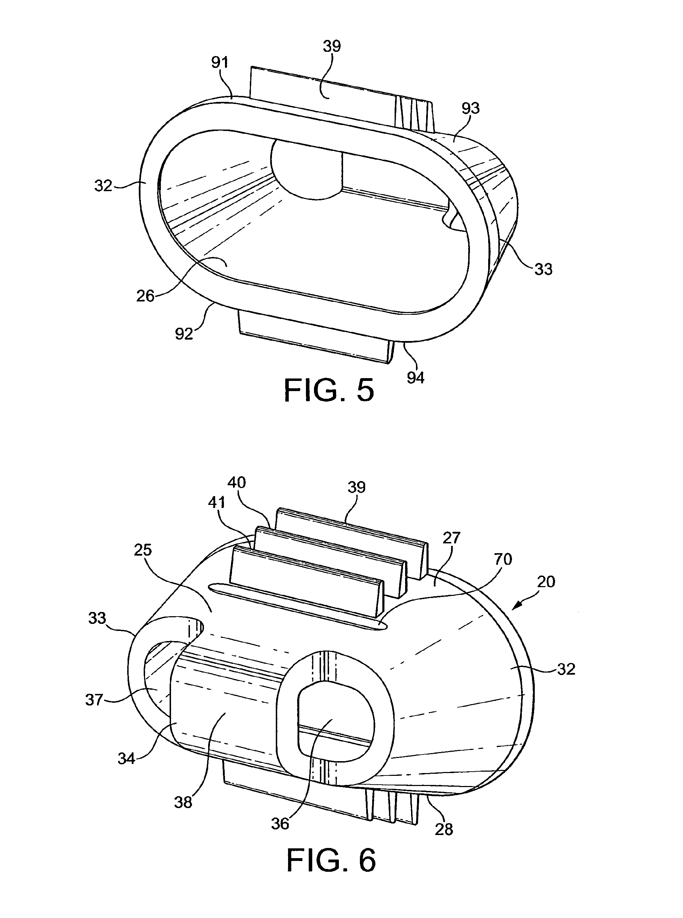

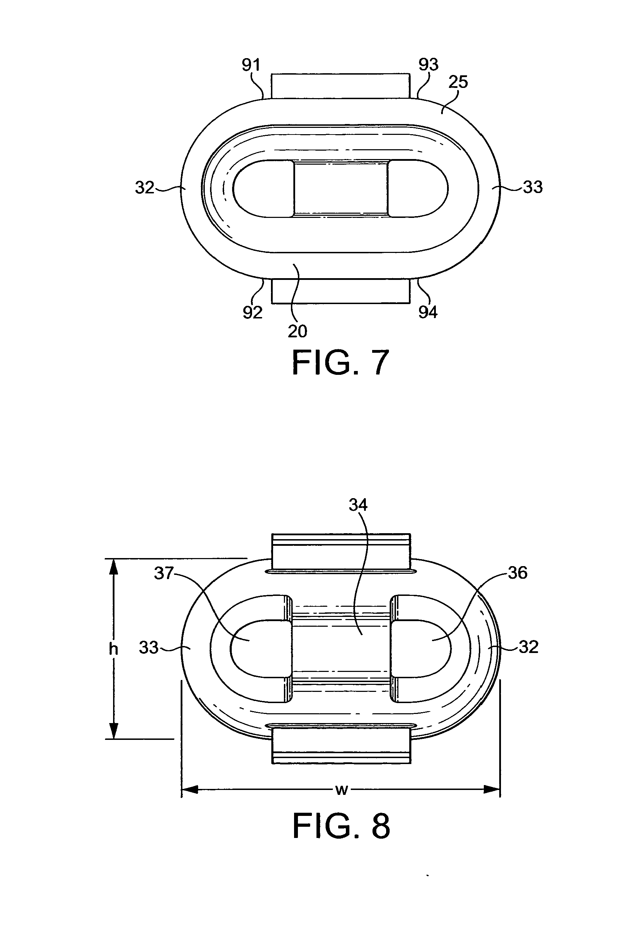

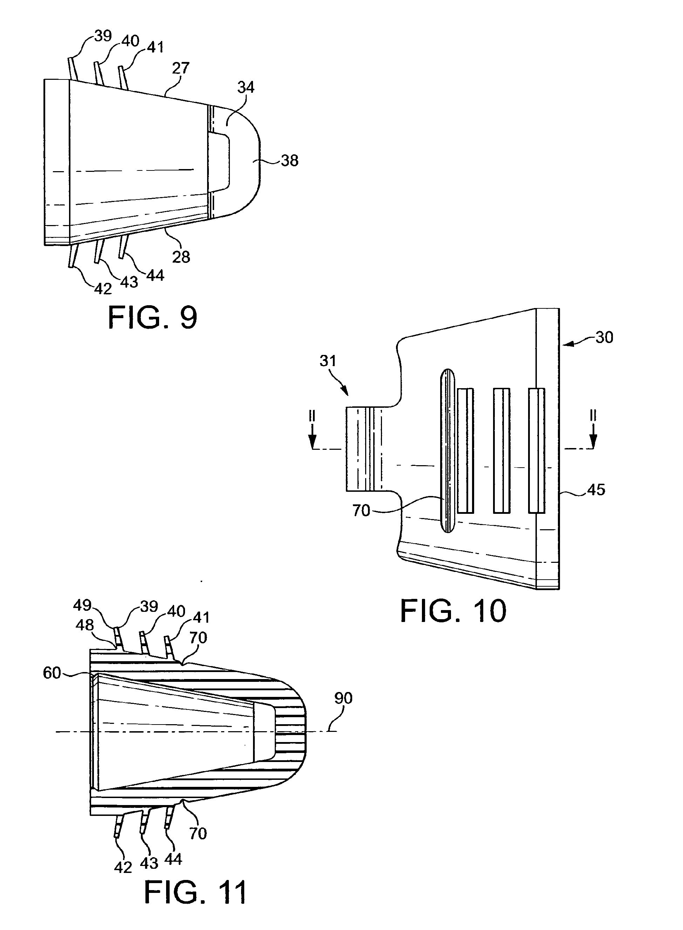

An example of a wedge device in accordance with the invention will now be described in more detail with reference to figures 5 to 11.

The wedge device 20 is injection moulded in one piece from a hard thermoplastic material, for example acetal copolymer. Describing the structure in the orientation as viewed in figure 5 of the drawings, it comprises a hollow structure open on its front side 30. It has opposing top and bottom wall portions 25 and 26 which are generally planer and have outer surfaces 27 and 28 that are inclined relative to one another so as converge towards one another from the front 30 of the device to the rear 31 of the device and give the structure of the device a wedge shape. The top and bottom wall portions are joined to one another at both of their corresponding inclined sides 91 and 92 and 93 and 94 by curved side wall portions 32 and 33. The curved wall portions are bowed outwardly so as to give the device a D-ended cross-section when viewed from the front. The curved wall portions are semi-frustoconical in shape so that they hold the planar wall portions apart in the wedge shape. The width of the device in the horizontal direction w is substantially greater than the height of the device h.

The planar wall portions 25 and 26 are also joined to one another at the rear of the device by a curved rear wall portion 34. Openings 36 and 37 are formed on either side of the curved rear wall portion 34 between the curved rear wall portion 34 and each of the curved side wall portions 32 and 33 respectively. The rear wall portion is bowed outwardly towards the rear to provide a rear abutment 38.

Gripping means in the form of three ribs 39, 40 and 41 project upwardly from the outer surface 27 of the top wall portion 25 and gripping means in the form of three ribs 42, 43 and 44 project downwardly from the outer surface 28 of the bottom wall portion 26. The ribs extend parallel to the front edge 45 of the device. Each rib is inclined at a small angle (approximately 5%) from the vertical towards the front of the device. Each rib tapers from its base 48 where it joins the outer surface of the planar wall portions of the device towards its outer edge or tip 49. The ribs are of uniform height from their respective outer surfaces 27, 28 so that the tips or extremities of the ribs lie in planes that converge towards a point behind the device. Thus, the tips of the ribs 39 and 42 that are nearest the front of the device are further from the centreline 90 of the device and from one another than the tips of the middle ribs 40 and 43 which, in turn, are 39 and 43 are further from the centreline 90 of the device and from one another than the tips of the ribs 41 and 44 that are nearest the rear of the device.

The whole device is injection moulded so that the wall portions 25 26, 32, 33 and 34 and the ribs 39 to 44 are continuous.

The device has a inwards projection in the form of a lip 60 which projects inwardly from the front edge of the device. The lip 60 extends around the entire inner front edge of the device.

The hollow structure and open front 30 of the device are so shaped that identical devices 20 can be nested together with the rear of one device inserted in the front of another device.

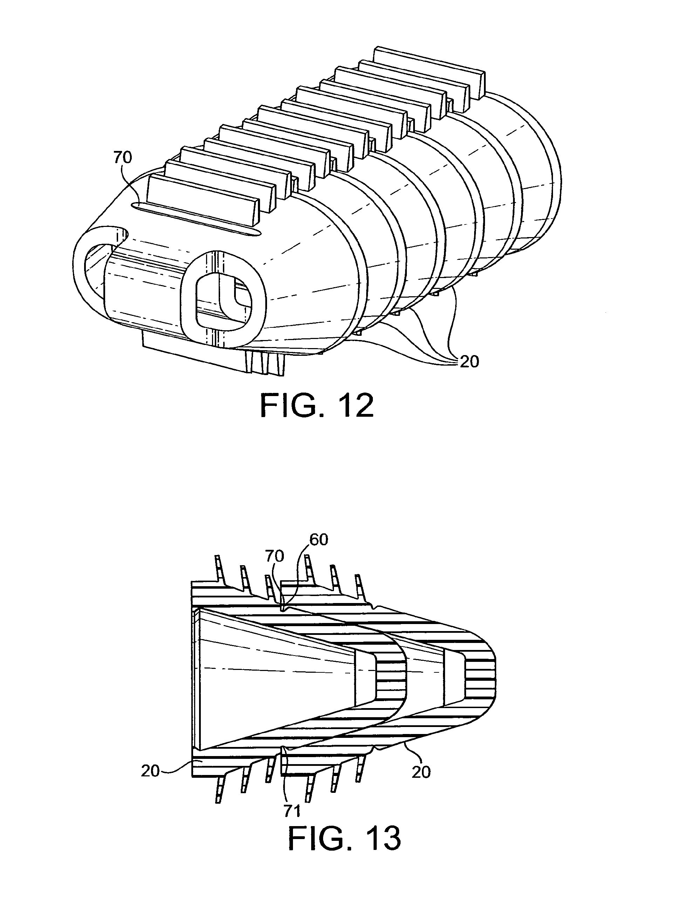

Each planar wall portion 25, 26 of the device has a groove 70, 71 in its outer surface 27, 28. The grooves are to the rear of and adjacent the rearmost ribs 41, 44 and extend parallel to the front edge of the device. The grooves 70, 71 form recesses on the outside of the device that cooperate with projections formed by the lip 60 on the inside of the front edge of an identical device when devices are nested to engage with the lip and thus releasably hold the devices together when they are nested. The flexibility of the plastics material from which the devices are made is sufficient to enable the lip to ride over the portion of the surfaces that flanks the grooves so that the devices can be snapped together or pulled apart manually. For ease of handling, the devices may be kept nested together in a stack as shown in figure 12 until they are required for inserting into a chase.

The embodiment described above is symmetrical about the horizontal plane through the centreline 90.

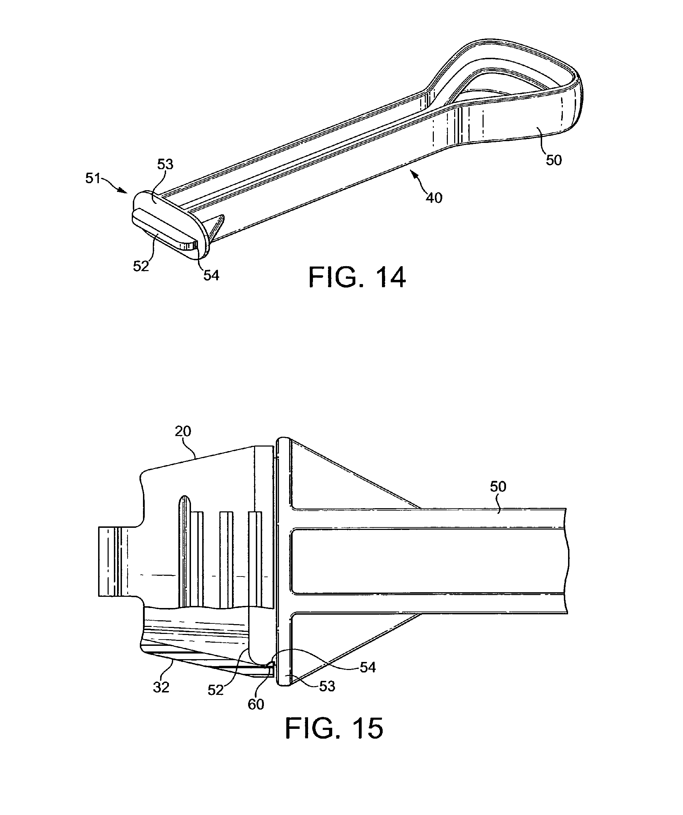

Figures 14 and 15 show a tool 40 that may be used for inserting the wedge devices 20 into a chase in a mortar layer. The device comprises handle portion 50 by which the tool can be gripped by an operator, and a wedged-device engaging means 51 for temporary gripping a wedge device 20. The engaging means 51 comprises a forwardly projecting flange 52 which is inserted into the open front of the device 20 and a transversely projecting flange 53 which abuts the front face 45 of the device 20. The device 20 clips onto the flange 52.

The inwardly projecting lip 60 around opening at the front of the device engages in a notch 54 in the transverse ends of the flange 52 to help retain the device in place. The transverse dimension of the flange 52 corresponds to the horizontal internal dimension of the device 20 so that the device is frictionally retained on the end of the tool. There is clearance between the top and bottom walls of the device and the upper and lower surfaces of the tool. The tool may be moulded of a suitable strong thermoplastic material for example, glass-filled nylon 6.

A device 20 may be clipped onto the flange on the end of the tool 50 for ease of insertion the chased channel in the brickwork. The engagement of the ends of the flange 52 with the inside of the curved side wall portions 32 and 33 and the lip 60 in the notch 54 serve to retain the device on the handle whilst the tool is pushed forward to insert the device into the chase. The transverse flange 53 bears against the front face of the device to push on the device. As the device is squeezed by engagement of the ribs with the upper wall of the chase and the surface of the flange 17 on the flashing, the upper and lower wall portions move towards one another at the front edges and the curved wall portions are bowed out more. The clearance between the top and bottom walls of the device and the upper and lower surfaces of the tool allows the wall portions to come closer together without gripping the tool, thus permitting the tool to be released from the device once insertion is completed.

Figures 3 and 4 and 16 show the disposition of the device when inserted into a chase between the flange 17 on the lead flashing and the under side 81 of the overlying brick 22. The flange 17 rests on the brick 64 which lies under the chase. The abutment 38 formed by the curved rear wall 34 of the device engages the mortar 61 which defines the back wall 62 of the chase 21 to limit how far the device can be inserted into the chase and ensure that the rear edges of the side wall portions and the top and bottom wall portions are spaced from the back wall of the chase. The ribs 39,40 and 41 on the upper surface of the device engage the underside 81 of the brick 22 which overlies the chase. The ribs 42, 43 and 44 on the underside of the device engage the upper surface of the flange 17.

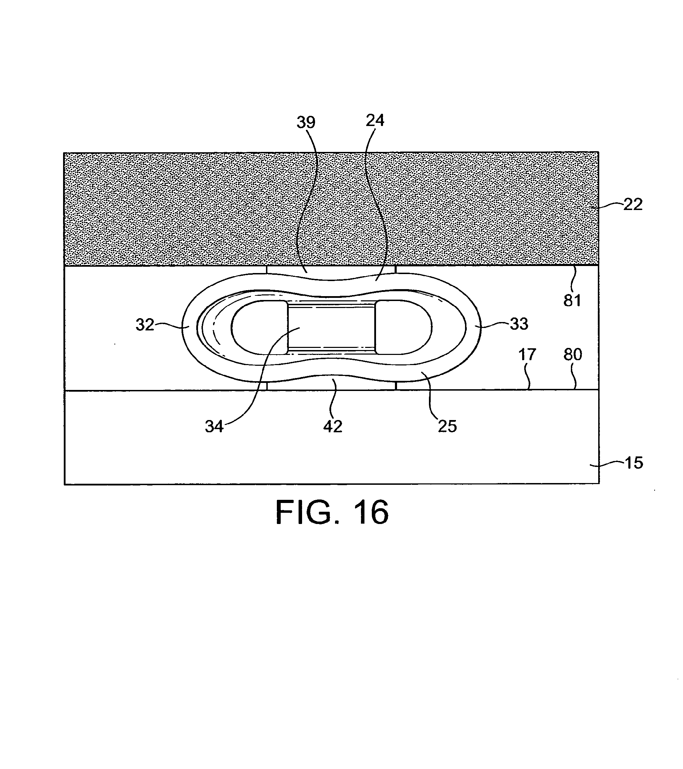

The height of the device h ignoring the ribs is less than the distance d between the upper surface of 80 the flange 17 and the underside of the overlying brick 22, but the height with the ribs is greater than the distance d. Thus, as the device is pushed into the chase 18 the opposing pairs of ribs 41 and 44, 40 and 43 and 39 and 42 will in turn engage the surfaces 81 and 80 respectively distorting the device progressively as the device is inserted. The ribs will bend towards the front of the device. The force applied through the ribs to the top and bottom planar wall portions will cause them to be bowed inwardly towards one another as can be seen in figure 16. The angle of inclination of the top and bottom wall portions to one another is thus reduced. The curved side wall portions 32 and 33 and the curved rear wall portion 34 act in the manner of springs acting against the forces squeezing the device. In this way, the ribs grip the flange and the overlying brickworks to hold the flange in the chase.

Once the device is in place, a mastic sealant 99 is injected into the hollow space in the device to secure the device more firmly in place in the chase. The sealant will ooze through the openings 35 and 36 at the rear of the device. The mastic passes behind the side walls portions of the device and in front of the curved rear wall thus more firmly securing the device in place. Once the flashing is securely in place in this manner, the rest of the chase is filled with mastic or mortar 99 and pointed to provide a weatherproof finish.

The devices in accordance with the present invention as described above being moulded of plastics material are light in weight compared with metal wedges and are easy to carry. They have no sharp edges to injure the roofer or his clothing and they can be easily carried in the pocket.

The device is made of a suitable plastics material which is strong, elastic resilient, flexible but has sufficient degree of stiffness. We have found that an acetal copolymer is suitable but other suitable materials may be used.

## Claims

1. A wedge device for retaining the edge of flashing in a chase in a wall or similar structure, the wedge device (20) comprising a hollow wedge structure which is open at the front (30) of the structure and has opposing top and bottom planar wall portions (25 and 26) with outer surfaces (27 and 28) that are inclined to one another so as to converge towards one another towards the rear (31) of the structure, the planar wall portions being joined together at both of their corresponding inclined sides (91 and 92, 93 and 94) by curved wall portions (32, 33), the planar wall portions and the curved wall portions being integrally moulded from plastics material, the curved wall portions holding the planar wall portions apart from one another, but flexing under pressure so as to allow the planar wall portions to move towards one another when, in use, the wedge device is squeezed into a chase.

2. A wedge device according to claim 1 in which the curved wall portions (32, 33) are semi-frustoconical.

3. A wedge device according to claim 1 or 2 in which the planar wall portions are joined together at the rear by a rear wall portion (34).

4. A wedge device according to claim 3 in which the rear wall portion (34) is curved.

5. A wedge device according to claim 3 or 4 in which there are openings (36, 37) between the rear wall portion (34) and the side wall portions (32, 33).

6. A wedge device according to any of the previous claims including an abutment portion (38) projecting rearwardly from the structure for abutting the back of the chase in use to space other parts of the structure from the back of the chase.

7. A wedge device according to any of the previous claims, including gripping means (39 to 44) projecting from the outer surfaces (27, 28) of the planar wall portions.

8. A wedge device according to claim 7 in which the gripping means comprise ribs (39, 40, 41, 42, 43, 44) projecting outwardly from the outer surface of the planar wall portions,

9. A wedge device according to claim 8 in which the ribs (39, 40, 41, 42, 43, 44) extend generally parallel to the front (30) of the structure,

10. A wedge device according to claim 9 in which the ribs (39, 40, 41, 42, 43, 44) are thicker at their base (48) where they join the planar wall portions than at their tips.

11. A wedge structure according to claim 9 or 10 in which the tips (49) of the ribs that are nearer to the front of the structure project further from the centreline (90) of the structure than the tips (49) of the ribs that are nearer to the rear.

12. A wedge device according to any of the preceding claims in which the structure is shaped so that the rear of the structure can be nested in the open front end of an identical wedge device.

13. A wedge device according to claim 12 including releasable interlocking means (60, 70, 71) for releasably holding the nested wedge devices together in a stack.

14. A wedge device according to claim 13 in which the releasable interconnecting means comprise an inwardly projecting lip (60) on the inside of the front (30) of the structure and a recess (70, 71) on the outside of at least one of the planar walls, the lip on one device engaging in the recess of the other device when the wedge device is nested with an identical device.

15. A wedge device for retaining the edge of flashing in a chase in a wall or similar structure, the wedge device (20) comprising a hollow structure moulded from plastics material which is open at the front (30) of the structure and has opposing top and bottom wall portions (25 and 26), the top and bottom wall portions being joined together at both of their corresponding sides (91 and 92, 93 and 94) by curved wall portions (32, 33), the planar wall portions and the curved wall portions being integrally moulded from plastics material, gripping means (39 to 44) projecting from the outer surfaces (27, 28) of the top and bottom wall portions, the outer tips (49) of the gripping means near to the front of the structure projecting further from the centreline of the structure ribs that than the tips (49) of the gripping means near to the rear.
